# EUROPÄISCHE PATENTSCHRIFT

(11) **EP 4 064 549 B1**
(45) Veröffentlichungstag und Bekanntmachung des Hinweises auf die Patenterteilung: **13.11.2024**
(21) Anmeldenummer: 22161524.8
(22) Anmeldetag: 11.03.2022
(51) Int. Cl.: H02P 29/024, H02P 6/00, H02P 6/12, B60L 13/03, H02P 25/064, B60L 3/00

(54) **TRANSPORTANLAGE IN FORM EINES LANGSTATORLINEARMOTORS UND VERFAHREN ZUM BETREIBEN DIESER**
TRANSPORT SYSTEM IN THE FORM OF A LONG STATOR LINEAR MOTOR AND METHOD FOR OPERATING THE SAME
INSTALLATION DE TRANSPORT SOUS FORME D'UN MOTEUR LINÉAIRE À STATOR LONG ET PROCÉDÉ DE FONCTIONNEMENT DE LADITE INSTALLATION DE TRANSPORT

(30) Priorität: 25.03.2021 AT 502122021
(43) Veröffentlichungstag der Anmeldung: 28.09.2022
(73) Patentinhaber: B&R Industrial Automation GmbH, 5142 Eggelsberg (AT)
(72) Erfinder: Flixeder, Stefan, 5142 Eggelsberg (AT); Reichenwallner, Benjamin, 5142 Eggelsberg (AT); Hauer, Michael, 5142 Eggelsberg (AT); Zimmer, Birgit, 5142 Eggelsberg (AT)
(74) Vertreter: Patentanwälte Pinter & Weiss OG

(56) Entgegenhaltungen:
- EP-A1- 3 202 612
- WO-A1-92/00862
- JP-A- 2020 025 388
- US-A1- 2020 148 481

## Beschreibung

Die Erfindung betrifft ein Verfahren zum Betreiben einer Transportanlage in Form eines Langstatorlinearmotors mit einem Stator an dem eine Vielzahl von Magnetfelderzeugungseinheiten angeordnet sind und mit einer Vielzahl von Transporteinheiten, die gleichzeitig entlang des Stators bewegt werden, wobei im Falle eines Anlagenfehlers an einem Teil der Transportanlage, ein Fehlerumfang am Stator festgelegt wird, wobei der Fehlerumfang nur einen Teil des Stators mit dem fehlerhaften Teil der Transportanlage umfasst, und die Magnetfelderzeugungseinheiten im Fehlerumfang in einen vorgegebenen Fehlerzustand übergeführt werden. Die Erfindung betrifft auch eine entsprechend ausgeführte Transportanlage.

Die EP 3 202 612 A1, WO 92/00862 A1 und die JP 2020/025388 A1 zeigen ein solches Verfahren.

Bei einem Linearmotor ist ein Primärteil (Stator) vorgesehen und ein Sekundärteil (Läufer), der relativ zum Primärteil bewegbar angeordnet ist. Am Primärteil sind Magnetfelderzeugungseinheiten angeordnet und am Sekundärteil Antriebsmagnete, oder umgekehrt. Die Antriebsmagnete sind entweder als Permanentmagnete, elektrische Spulen oder Kurzschlusswicklungen ausgeführt. Die Magnetfelderzeugungseinheiten können als Antriebsspulen ausgeführt sein. Antriebsspulen sind elektrische Spulen, die zur Erzeugung eines elektromagnetischen Feldes durch Anlegen einer Spulenspannung bestromt werden. Die Magnetfelderzeugungseinheiten können aber auch als bewegte Magnete (Permanentmagnete) ausgeführt sein, um das elektromagnetische Feld zu erzeugen, beispielsweise wie in EP 3 582 376 A1 beschrieben ist. Durch das Zusammenwirken der (elektro)magnetischen Felder der Antriebsmagnete und der Magnetfelderzeugungseinheiten wirken Kräfte auf den Sekundärteil, die den Sekundärteil relativ zum Primärteil bewegen. Der Linearmotor kann beispielsweise als Synchronmaschine oder als Asynchronmaschine ausgeführt sein. Die Magnetfelderzeugungseinheiten des Linearmotors sind entweder entlang einer Bewegungsrichtung angeordnet oder in einer Bewegungsebene. Der Sekundärteil kann entlang dieser einen Bewegungsrichtung bewegt werden oder frei in der Bewegungsebene in den zwei Bewegungsrichtungen. Man kann auch zwischen Kurzstatorlinearmotoren und Langstatorlinearmotoren unterscheiden, wobei beim Langstatorlinearmotor der Sekundärteil kürzer oder kleiner als der Primärteil ist und beim Kurzstatorlinearmotor der Primärteil kürzer oder kleiner als der Sekundärteil ist.

Die Erfindung betrifft Langstatorlinearmotoren, worunter ausdrücklich lineare Langstatorlinearmotoren (mit Bewegung in einer Bewegungsrichtung), als auch planare Langstatorlinearmotoren (mit Bewegung in einer Bewegungsebene, häufig auch Planarmotor genannt) verstanden werden. Bei Langstatorlinearmotoren werden üblicherweise mehrere Sekundärteile gleichzeitig und unabhängig voneinander entlang des Primärteiles (in einer Bewegungsrichtung oder in einer Bewegungsebene) bewegt. Langstatorlinearmotoren werden daher oftmals in elektromagnetischen Transportsystemen eingesetzt, bei denen mehrere Transporteinheiten (Sekundärteile) zur Durchführung von Transportaufgaben gleichzeitig bewegt werden.

Aus dem Stand der Technik sind Langstatorlinearmotoren bekannt. In einem Langstatorlinearmotor sind Magnetfelderzeugungseinheiten in Bewegungsrichtung hintereinander oder in einer Bewegungsebene entlang einer Stützkonstruktion angeordnet. Im Falle eines Planarmotors sind auch Anordnungen der Magnetfelderzeugungseinheiten bekannt, bei denen Magnetfelderzeugungseinheiten am Stator in mehreren Ebenen angeordnet sind, wobei die Magnetfelderzeugungseinheiten einer Eben für eine Bewegungsrichtung vorgesehen sein können. Die an der Stützkonstruktion angeordneten Magnetfelderzeugungseinheiten bilden den Stator des Langstatorlinearmotors, der sich im Bewegungsraum der Transportanlage erstreckt. An einem Läufer sind Antriebsmagnete, entweder Permanentmagnete oder Elektromagnete, angeordnet, die ein magnetisches Erregungsfeld erzeugen. Der Läufer fungiert in einer Transportanlage als Transporteinheit, beispielsweise zum Bewegen eines Gegenstandes. Werden die Antriebsspulen im Bereich eines Läufers bestromt, so wird ein elektromagnetisches Antriebsmagnetfeld erzeugt, das mit dem Erregungsfeld der Antriebsmagnete zur Erzeugung einer Antriebskraft auf den Läufer zusammenwirkt. Gleiches kann mit den bewegten Magneten als Magnetfelderzeugungseinheiten bewirkt werden. Durch Steuern der Bestromung der Antriebsspulen oder der Bewegung der Magnete kann ein bewegtes Antriebsmagnetfeld erzeugt werden, womit der Läufer in Bewegungsrichtung oder in der Bewegungsebene des Langstatorlinearmotors bewegbar ist. Der Vorteil ist, dass gleichzeitig eine Vielzahl von Läufern unabhängig voneinander auf dem Stator bewegt werden können, wobei die Bewegungen der Läufer entlang des Stators von einer Steuerung einzeln und unabhängig voneinander gesteuert werden können. Hierzu können die Antriebsspulen einzeln zur Bestromung angesteuert werden, oder auch in Gruppen. In diesem Zusammenhang ist es auch bereits bekannt, einen Langstatorlinearmotor mittels Statormodule modular aufzubauen. Dabei werden an einem Statormodul eine bestimmte Anzahl von Magnetfelderzeugungseinheiten (üblicherweise >1) angeordnet. Einzelne Statormodule werden dann zu einem Stator der gewünschten Länge und/oder Form zusammengefügt. Beispielsweise zeigt die WO 2015/042409 A1 einen derartigen modular aufgebauten linearen Langstatorlinearmotor. Die US 9,202,719 B1 zeigt einen Langstatorlinearmotor in Form eines Planarmotors mit Statormodulen.

Aufgrund des Umstandes, dass die Läufer einzeln und unabhängig voneinander am Stator bewegt werden können, ist es bereits bekannt, eine Kollisionsvermeidung vorzusehen. Die Kollisionsvermeidung dient dazu, eine unerwünschte Kollision zwischen zwei Läufern oder zwischen einem Läufer und einem anderen Teil der Transportanlage, wie beispielsweise ein Teil einer an der Transportanlage vorgesehenen Bearbeitungsstation, zu verhindern. Eine solche Kollisionsvermeidung geht beispielsweise aus der EP 3 202 612 A1 hervor. Bei dieser Kollisionsvermeidung wird laufend geprüft, ob eine Transporteinheit ein Stillstandsmanöver mit vorgegebener Kinematik ausführen kann, ohne Gefahr zu laufen, mit einer vorausfahrenden Transporteinheit oder mit einer ortsfesten Barriere zu kollidieren. Das setzt aber voraus, dass die Kollisionsüberwachung über die aktuellen Bewegungen oder die aktuellen Positionen der beteiligten Transporteinheiten, insbesondere im unmittelbaren Umfeld, Bescheid weiß. Außerdem setzt eine Kollisionsvermeidung voraus, dass eine Steuerung der Läufer überhaupt möglich ist. In einem Fehlerfall, in dem die Positionen der Läufer zwar bekannt sind, aber die Steuerung der Bewegung der Läufer nicht möglich ist, scheitert eine solche Kollisionsvermeidung ebenso. Im Falle eines Fehlers einer Transportanlage, z.B. ein Fehler an der Transporteinheit und/oder am Stator, kann es daher vorkommen, dass keine oder eine nur ungenaue Aussage über die aktuelle Bewegung oder Position einer Transporteinheit getroffen werden kann. In einem solchen Fall kann eine derartige Kollisionsvermeidung versagen. Bisher war es daher üblich, im Fehlerfall die gesamte Transportanlage stillzusetzen und erst wieder nach der Behebung des Fehlers in Betrieb zu nehmen. Ein Stillsetzen der gesamten Transportanlage ist aber aus offensichtlichen Gründen oftmals unerwünscht, insbesondere in großen Transportanlagen mit langen Transportstrecken und einer großen Anzahl von gleichzeitig bewegten Transporteinheiten (hier können durchaus mehrere hundert Transporteinheiten vorkommen). Ein Ausfall einer solchen Transportanlage verursacht die Unterbrechung auch sämtlicher mit der Transportanlage in Verbindung stehender Anlagenteile, wie beispielsweise Bearbeitungsstationen, oder andere Transportanlagen, und sollte vermieden werden. Abgesehen davon kann die Fehlersuche aufwendig sein, wenn der Fehler nicht identifizierbar ist.

Aus der US 9,806,647 B2 ist es bekannt, eine Transportanlage in Form eines Langstatorlinearmotors in einen sicheren Zustand überzuführen, wenn ein Fehler festgestellt wird. Der sichere Zustand kann das Stillsetzen der gesamten Transportanlage, mit den oben genannten Nachteilen, sein. Alternativ kann eine einzelne Transporteinheit in einen sicheren Zustand überführt werden, wenn diese fehlerhaft ist. Der sichere Zustand besteht im letzteren Fall darin, dass die Antriebsspulen im Bereich der fehlerhaften Transporteinheit stromlos geschaltet werden oder mit den Antriebsspulen im Bereich der fehlerhaften Transporteinheit eine konstante Kraft erzeugt wird. Ein derartiger sicherer Zustand ist jedoch unzureichend, weil hierbei die anderen Transporteinheiten außer Acht gelassen werden. In Abhängigkeit vom Fehler kann es dadurch zu kritischen Situationen mit anderen Transporteinheiten, beispielsweise zu Kollisionen, kommen, die mehr Schaden verursachen können. Wenn beispielsweise mit einer Transporteinheit eine Flüssigkeit in einem Behältnis transportiert wird, könnte diese bei einer Kollision mit einer anderen Transporteinheit verschüttet werden, was wiederum den Stator oder die Leistungselektronik der Antriebsspulen beschädigen oder gar zerstören kann. Auch Beschädigungen eines Läufers oder eines transportierten Gegenstandes sind möglich. Damit könnte der Folgeschaden größer sein, als der Schaden der bei einem Stillsetzen der Transportanlage auftreten würde. Dieses Vorgehen wird daher als unzureichend angesehen.

Es ist folglich eine Aufgabe der gegenständlichen Erfindung, bei Auftreten eines Anlagenfehlers an der Transportanlage, die Auswirkungen des Anlagenfehlers an einer Transportanlage möglichst einzugrenzen, ohne die Sicherheit der restlichen Transportanlage einzuschränken.

Diese Aufgabe wird mit den Merkmalen von Ansprüchen 1 und 10 gelöst. Erfindungsgemäß wird an der Transportanlage nur lokal ein Fehlerumfang festgelegt und nur die Antriebsspulen im Fehlerumfang werden in einen vorgegebenen Fehlerzustand überführt. Das gewährleistet eine kontrollierte, lokale Fehlerbehandlung im Falle eines Anlagenfehlers. Ein gänzliches Abschalten der gesamten Transportanlage kann damit weitestgehend verhindert werden, wodurch die Verfügbarkeit der Transportanlage erhöht wird. Im Bewegungsumfangs des Stators außerhalb des Fehlerumfangs, können die dort bewegten Transporteinheiten normal und unbeeinflusst vom Fehler weiterbewegt.

Wenn sich eine Transporteinheit in diesem Fehlerumfang befindet oder aufgrund deren Bewegung in den Fehlerumfang eintritt, kann diese kontrolliert in einen Fehlerzustand übergeführt werden und dabei eine festgelegte Fehlerreaktionsbewegung ausführen. Eine Transporteinheit reagiert demnach erst dann auf einen Anlagenfehler, wenn sich diese im Fehlerumfang befindet. In diesem Fall kann die Transporteinheit eine kontrollierte Fehlerreaktionsbewegung ausführen, womit eine kontrollierte, lokale Fehlerbehandlung aller vom Anlagenfehler betroffener Transporteinheiten sichergestellt ist.

Die Fehlerreaktionsbewegung kann auf einfache Weise derart erzeugt werden, dass zumindest eine Antriebsspule im festgelegten Fehlerumfang stromlos geschaltet wird oder zumindest eine Antriebsspule im festgelegten Fehlerumfang kurzgeschlossen wird.

Ebenso kann damit der Fall des Austretens einer Transporteinheit aus dem Fehlerumfang in kontrollierte Weise abgehandelt werden. Im Falle des Austretens einer Transporteinheit aus dem festgelegten Fehlerumfang kann der Fehlerzustand der ausgetretenen Transporteinheit aufgehoben werden oder ein weiterer Fehlerumfang um die ausgetretene Transporteinheit gelegt werden. Dabei kann erfindungsgemäß vorgesehen sein, dass der Fehlerumfang mit der Bewegung der in den Fehlerzustand überführten ersten Transporteinheit mitbewegt wird, wenn als Anlagenfehler ein Fehler der ersten Transporteinheit festgestellt wird. Damit kann der Fehler lokal um die bewegte Transporteinheit gehalten werden, womit der Fehlereinfluss lokal am Stator begrenzt werden kann.

Wenn der Fehlerumfang durch Bereichsbarrieren vom restlichen Bewegungsumfang des Stators abgesperrt wird, sodass keine Transporteinheit den Fehlerumfang betreten oder aus diesem austreten kann, kann der Bereich des Anlagenfehlers einfach auf einen ganz konkreten Teil des Stators begrenzt werden. Dabei bleiben die Transporteinheiten außerhalb der Bereichsbarrieren weitestgehend unbeeinflusst.

Die gegenständliche Erfindung wird nachfolgend unter Bezugnahme auf die Figuren 1 bis 10 näher erläutert, die beispielhaft, schematisch und nicht einschränkend vorteilhafte Ausgestaltungen der Erfindung zeigen. Dabei zeigt
Fig.1 eine mögliche Ausführung eines linearen Langstatorlinearmotors,
Fig.2 eine mögliche Ausführung eines planaren Langstatorlinearmotors,
Fig.3 und 4 mögliche Fehlerumfänge im Falle eines Anlagenfehlers,
Fig.5 und 6 das Eintreten einer Transporteinheit in einen Fehlerumfang,
Fig. 7 und 8 eine Erweiterung eines Fehlerumfangs und
Fig. 9 und 10 die Verwendung von Bereichsbarrieren zum Absperren eines Fehlerumfanges.

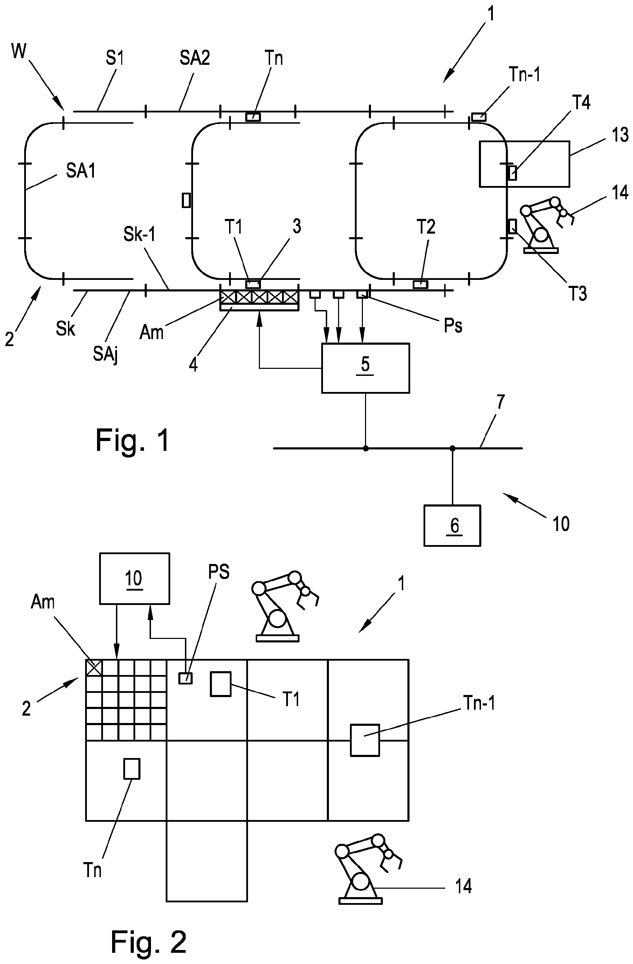

Fig.1 zeigt einen beispielhaften Aufbau einer Transportanlage 1 in Form eines linearen Langstatorlinearmotors, und Fig.2 eines planaren Langstatorlinearmotors. Nachdem die Erfindung allgemein auf Langstatorlinearmotoren anwendbar ist, wird in weiterer Folge nur mehr dann zwischen linearen und planaren Langstatorlinearmotoren unterschieden, wenn es für das Verständnis notwendig oder sinnvoll ist. Der konstruktive Aufbau und die Geometrie des Stators 2 und der Transporteinheit 3 spielt für die Erfindung aber keine Rolle und kann jedenfalls beliebig ausgeführt sein. Ebenso sind in den Figuren aus Gründen der Übersichtlichkeit hinlänglich bekannte Führungskonstruktionen zur Führung einer Transporteinheit 3 entlang des Stators 2 und/oder zum Halten einer Transporteinheit 3 am Stator 2 nicht dargestellt. Auch solche Führungskonstruktionen können beliebig ausgeführt sein. Im Falle eines planaren Langstatorlinearmotors erfolgt die Führung einer Transporteinheit 3 üblicherweise magnetisch.

Die Erfindung wird nachfolgend am konkreten Beispiel eines Langstatorlinearmotor mit Antriebsspulen Am am Stator 2 als Magnetfelderzeugungseinheiten beschrieben. Es sei aber angemerkt, dass anstelle der Antriebsspulen Am auch bewegte Permanentmagnete am Stator 2 zur Erzeugung des bewegten Magnetfeldes, das mit einer Antriebsmagnetanordnung 3 an der Transporteinheit Tn zusammenwirkt, vorgesehen sein können, oder auch andere geeignete Magnetfelderzeugungseinheiten zur Erzeugungen des bewegten Magnetfeldes. Auch eine Mischung verschiedenere Magnetfelderzeugungseinheiten am Stator 2 ist grundsätzlich denkbar.

Ein Langstatorlinearmotor besteht aus einem Stator 2 und einer Vielzahl von Transporteinheiten Tn (mit n > 1), die entlang des Stators 2 bewegt werden können. Zur Bewegung sind am Stator 2 Antriebsspulen Am (mit m > 1) angeordnet, entweder in Bewegungsrichtung hintereinander (linearer Langstatorlinearmotor wie in Fig.1) oder in einer Bewegungsebene (planarer Langstatorlinearmotor wie in Fig.2), wobei die Antriebsspulen Am eines planaren Langstatorlinearmotors auch in mehreren, übereinander liegenden Ebenen angeordnet sein können. In den Figuren sind aus Gründen der Übersichtlichkeit nur ein paar der Antriebsspulen Am dargestellt. Es ist aber bekannt, dass die Antriebsspulen Am entlang des gesamten Bewegungsbereiches des Langstatorlinearmotor angeordnet sind. An einer Transporteinheit Tn ist eine Antriebsmagnetanordnung 3, üblicherweise eine Anordnung aus Permanentmagneten, angeordnet. Auch diese ist aus Gründen der Übersichtlichkeit in den Figuren nur angedeutet. Die Antriebsmagnetanordnung 3 und die Antriebsspulen Am sind bekanntermaßen so angeordnet, dass sich dazwischen ein Luftspalt des Motors ausbildet.

Der Stator 2 kann aus einzelnen Statorsegmenten Sk (mit k > 1) zusammengesetzt sein, wobei an jedem Statorsegment Sk eine Anzahl von Magnetfelderzeugungseinheiten (Antriebsspulen Am, bewegte Permanentmagnete) angeordnet sind. Der Stator 2 kann auch aus einzelnen Statorabschnitten SAj (mit j ≥ 1) zusammengesetzt sein (wie in Fig.1), die über Weichen W miteinander verbunden sein können, und den Stator 2 ausbilden. Ein Statorabschnitt SAj kann dabei wieder aus mehreren Statorsegmenten Sk zusammengesetzt sein.

Die Antriebsspulen Am können durch Anlegen einer Spulenspannung bestromt werden und erzeugen so ein elektromagnetisches Feld, das mit der Antriebsmagnetanordnung 3 zusammenwirkt, um eine auf die Transporteinheit Tn wirkende Kraft und/oder ein wirkendes Moment zu erzeugen. Dieses elektromagnetische Feld kann auch von einer anderen Magnetfelderzeugungseinheiten erzeugt werden, beispielsweise von bewegten Permanentmagneten. Diese Kraft kann in Bewegungsrichtung (im planaren Fall sind zwei Bewegungsrichtungen in der Ebene möglich) erzeugt werden und dient dann als Vortriebskraft zur Bewegung der Transporteinheit Tn. Auch eine Rotation auf eine Achse, die orthogonal auf die Bewegungsebene ist, ist möglich. Es ist aber auf diese Weise auch möglich, zusätzlich zur Vortriebskraft, eine Kraft in einer Richtung quer zur Vortriebskraft zu erzeugen. Eine solche Querkraft kann beispielsweise in einem Aufbau nach Fig.1 verwendet werden, um an einer Weiche W eine elektromagnetische Weichenstellung zu bewirken (beispielsweise wie in EP 3 109 998 A1 beschrieben). In einem Aufbau wie in Fig.2 kann eine solche Querkraft zum Schweben der Transporteinheit Tn über der Bewegungsebene und/oder für eine Rotation um eine Achse in Richtung einer Bewegungsrichtung verwendet werden. Dieses Wirkprinzip eines Langstatorlinearmotors ist hinlänglich bekannt, sodass hier nicht weitere darauf eingegangen werden muss.

Am Stator 2 kann auch eine Bearbeitungsstation 13 vorgesehen sein, in der ein mit einer Transporteinheit Tn beförderter Gegenstand bearbeitet (was jegliche Manipulation am Gegenstand beinhaltet) werden kann. Ebenso kann am Stator 2, beispielsweise in einer Bearbeitungsstation 13 oder im Bereich einer Bearbeitungsstation 13, auch eine Handhabungseinrichtung 14, beispielsweise ein Roboter, vorgesehen sein, der eine Interaktion mit einem mit einer Transporteinheit Tn beförderten Gegenstand ermöglicht, auch während der Bewegung der Transporteinheit Tn.

Bei einem linearen Langstatorlinearmotor ist es auch möglich, dass in Bewegungsrichtung gesehen an beiden Seiten Antriebsspulen Am am Stator 2 angeordnet sind und die Transporteinheit Tn dazwischen bewegt wird (wie in Fig.1 mit der Transporteinheit Tn angedeutet). Wenn auch an der Transporteinheit Tn in Bewegungsrichtung gesehen an beiden Seiten jeweils eine Antriebsmagnetanordnung 3 vorgesehen ist, dann können durch Bestromen der Antriebsspulen Am an beiden Seiten auch an beiden Seiten gleichzeitig auf die Transporteinheit Tn wirkende Kräfte (auch unterschiedliche) erzeugt werden. Mit einer solchen Anordnung lassen sich an einem linearen Langstatorlinearmotor insbesondere auch Weichen W realisieren, an denen eine Transporteinheit Tn von einer Transportstrecke auf eine andere Transportstrecke übergeführt werden kann. Der Stator 2 wäre in einer solchen Ausführung der Transportanlage 1 nicht durchgehend, sondern würde aus mehreren Statorabschnitten, die jeweils eine Transportstrecke ausbilden, zusammengesetzt sein. Das ist in Fig.1 angedeutet.

Zur Erzeugung der Spulenspannung einer Antriebsspule Am kann eine Leistungselektronik 4 vorgesehen sein. Um die Antriebsspulen Am in gewünschter Weise bestromen zu können, ist eine Steuereinheit 5 vorgesehen, die Antriebsspulen Am bzw. die Leistungselektronik 4 entsprechend ansteuert. Üblicherweise ist die Steuereinheit 5 in Form mehrerer verteilter Segmentsteuereinheiten vorgesehen, die jeweils eine Anzahl von Antriebsspulen ansteuert. Die Segmentsteuereinheiten können dazu auch untereinander und/oder mit einer übergeordneten Anlagensteuereinheit 6 verbunden sein, beispielsweise über einen Datenbus 7. In der Anlagensteuereinheit 6 kann beispielsweise die Bewegung der Transporteinheiten Tn geplant oder vorgegeben werden, beispielsweise in Form eines Geschwindigkeitsverlaufs in Abhängigkeit von der Position am Stator 2. In der Anlagensteuereinheit 6 kann auch eine Kollisionsüberwachung für die Transporteinheiten Tn implementiert sein. Eine Steuereinheit 5 kann vorgesehen sein, um die Vorgaben der Anlagensteuereinheit 6 zur Bewegung einer Transporteinheit Tn in Spulenspannungen umzusetzen, um die gewünschte Bewegung zu realisieren. Diese Aufteilung in Steuereinheit 5 und Anlagensteuereinheit 6 ist aber nur beispielhaft. Allgemein ist eine Transportsteuereinheit 10 vorgesehen, die die Antriebsspulen Am ansteuert, um die gewünschten Bewegungen der Transporteinheiten Tn zu realisieren. Wie diese Transportsteuereinheit 10 ausgeführt ist, beispielsweise in Form einer kaskadierten Steuerung bestehend aus mehreren miteinander verbundener Steuereinheit wie in Fig.1, ist für die gegenständliche Erfindung jedoch unerheblich.

Eine Steuereinheit kann hierbei eine mikroprozessorbasierte Hardware sein, auf der Regelungssoftware ausgeführt wird. Die Steuereinheit kann aber auch als Computersoftware implementiert sein, die auf einer verfügbaren Computerhardware installiert und ausgeführt wird. Die Steuereinheit kann aber auch als integrierter Schaltkreis, wie eine anwendungsspezifische integrierte Schaltung (ASIC) oder Field Programmable Gate Array (FPGA) ausgeführt sein, auf dem auch ein Mikroprozessor implementiert sein kann. Die Steuereinheit kann auch als analoger Schaltkreis ausgeführt sein, beispielsweise als analoger Computer. Auch Kombinationen davon sind möglich.

Um die Position einer Transporteinheit Tn am Stator 2 bestimmen zu können, sind am Stator 2 üblicherweise auch Positionssensoren Ps (mit s > 1) angeordnet, wobei in den Figuren wieder aus Gründen der Übersichtlichkeit nur einige der Positionssensoren Ps dargestellt sind. Die Positionssensoren Ps liefern die erfassten Positionssignale an die Steuereinheit 5. Es kann aber auch eine sensorlose Positionserfassung implementiert sein, um die Position einer Transporteinheit Tn zu erfassen. Mit einer aktuellen Position kann auch ein geschlossener Regelkreis zur Positionsregelung einer Transporteinheit Tn realisiert werden.

Ein Positionssensor Ps kann ein Magnetfeld der Transporteinheit Tn erfassen, beispielsweise das Magnetfeld, das von der Antriebsmagnetanordnung 3 ausgeht, oder eines das von eigenen Positionsmagneten an der Transporteinheit Tn ausgeht. Ein solcher Positionssensor Ps kann beispielsweise als magnetostriktiver Sensor, magnetoresistiver Sensor oder als Hallsensor ausgeführt sein, wobei natürlich noch weitere Sensortypen existieren, die in der Lage sind ein Magnetfeld zu erfassen. Es sind aber natürlich auch Positionssensoren Ps denkbar, die eine andere physikalische Größe erfassen, beispielsweise optische oder induktive Sensoren.

Die Steuerung der Bewegung einer Transporteinheit Tn eines Langstatorlinearmotors ist aber ebenso hinlänglich bekannt und bedarf keiner weiteren Ausführungen.

An einer Transportanlage 1 in Form eines Langstatorlinearmotors können unterschiedliche Anlagenfehler auftreten, die unterschiedliche Auswirkungen haben können. Ein Anlagenfehler kann eine einzelne Transporteinheit Tn betreffen. Beispiele für einen solchen Anlagenfehler sind unter anderem ein zu großer Schleppfehler (Abweichung zwischen einem Sollwert und einem Istwert, beispielsweise für Position, Geschwindigkeit, Spulenstrom, Vortriebskraft, der Regelung der Bewegung der Transporteinheit Tn), ein Encoderfehler (Fehler in der Erfassung der Position, beispielsweise wenn ein Positionsmagnet an einer Transporteinheit beschädigt oder verloren wird), ein Betriebsfehler (Behinderung der Bewegung einer Transporteinheit). Ein Anlagenfehler kann auch einen bestimmten Bereich der Transportanlage 1, insbesondere einen Teil des Stator 2 (beispielsweise ein Statorsegment oder einen Streckenabschnitt), betreffen. Beispiele für einen solchen Bereichsfehler sind unter anderem eine Übertemperatur an einer Stelle des Stators 2, ein Spannungsversorgungsfehler für einen Teil des Stators 2, ein Netzwerkfehler in einem Bereich des Stators 2, ein Fehler in einer Bearbeitungsstation 13 oder einer Handhabungseinrichtung 14 in der ein Teil des Stators 2 angeordnet ist, ein mechanischer Fehler am Stator 2 usw. Ein Anlagenfehler betrifft aber jedenfalls nur einen Teil der Transportanlage 1. Ein Anlagenfehler, der die gesamte Transportanlage 1 beträfe, beispielsweise ein globaler Stromausfall oder Netzwerkausfall, würde unweigerlich zu einer Stillsetzung der gesamten Transportanlage 1 führen und ist damit nicht Gegenstand der Erfindung bzw. würde der bisherigen Fehlerreaktion in einer Transportanlage 1 entsprechen. Solche Anlagenfehler können beispielsweise in der Transportsteuereinheit 10 erkannt werden, beispielsweise anhand der bekannten Sollwerte und Istwerte einer Transporteinheit Tn. Anlagenfehler können aber auch durch Sensoren an der Transportanlage 1 erkannt werden, beispielsweise anhand von Temperatursensoren, Spannungssensoren, Stromsensoren, Lichtschranken usw. Es kann davon ausgegangen werden, dass Anlagenfehler und die Stelle des Auftretens eines Anlagenfehlers an der Transportanlage 1 erkannt werden und in der Transportsteuereinheit 10 bekannt sind.

Ein Anlagenfehler muss aber nicht zwingend dazu führen, dass eine Transporteinheit Tn nicht mehr bewegt werden kann. Ein Anlagenfehler führt aber jedenfalls dazu, dass eine Transporteinheit Tn nicht mehr in der Weise bewegt werden kann, in der diese im Normalbetrieb (ohne Anlagenfehler) bewegt werden würde. Der Normalbetrieb ist eine sollwertgeführte Bewegung der Transporteinheit Tn. Das bedeutet, dass die Transportsteuereinheit 10 Sollwerte für die Bewegung der Transporteinheit Tn erzeugt und diese Sollwerte durch Bestromen der Antriebsspulen Am im Bereich der Transporteinheit Tn mit hinreichend kleinen (vorgegebenen oder bekannten) Schleppfehler umgesetzt werden können. Ein übliches Beispiel für den Normalbetrieb ist eine sollpositionsgeführte Bewegung, anhand eines Sollwertes für die Position zu jedem Zeitpunkt der Regelung der Bewegung, der durch Bestromen der Antriebsspulen Am im Bereich der Transporteinheit Tn in jedem Zeitpunkt der Regelung der Bewegung erreicht wird (mit zulässigem Schleppfehler). Das kann in Form einer geschlossenen Regelung implementiert sein, wobei ein Istwert der Position erfasst oder ermittelt werden kann.

Tritt nun ein Anlagenfehler an einem Teil der Transportanlage 1 auf, wird ein Fehlerumfang F am Stator 2 festgelegt, der den fehlerhaften Teil der Transportanlage 1 umfasst. Der Fehlerumfang F umfasst nur den Teil des Stators 2 mit dem fehlerhaften Teil der Transportanlage 1 und die Antriebsspulen Am im Fehlerumfang F werden in einen vorgegebenen Fehlerzustand übergeführt. Der Teil des Stators 2 außerhalb des Fehlerumfangs F kann im Normalbetrieb weiter betrieben werden. Es kann auch vorgesehen sein (auch alternativ), dass eine Transporteinheit Tn, die sich in diesem Fehlerumfang F befindet, in einen Fehlerzustand übergeführt wird und dabei eine erste festgelegte Fehlerreaktionsbewegung ausführt. Es kann auch vorgesehen sein (auch alternativ), dass eine Transporteinheit Tn, die in den Fehlerumfang bewegt wird, in einen Fehlerzustand überführt wird und dabei eine erste festgelegte Fehlerreaktionsbewegung ausführt.

Tritt ein Anlagenfehler an einer Transporteinheit Tn auf, wird ein Fehlerumfang F um die Transporteinheit Tn festgelegt. Aufgrund der Bewegung der Transporteinheit Tn wird der Fehlerumfang F in diesem Fall mit der Transporteinheit Tn mitbewegt.

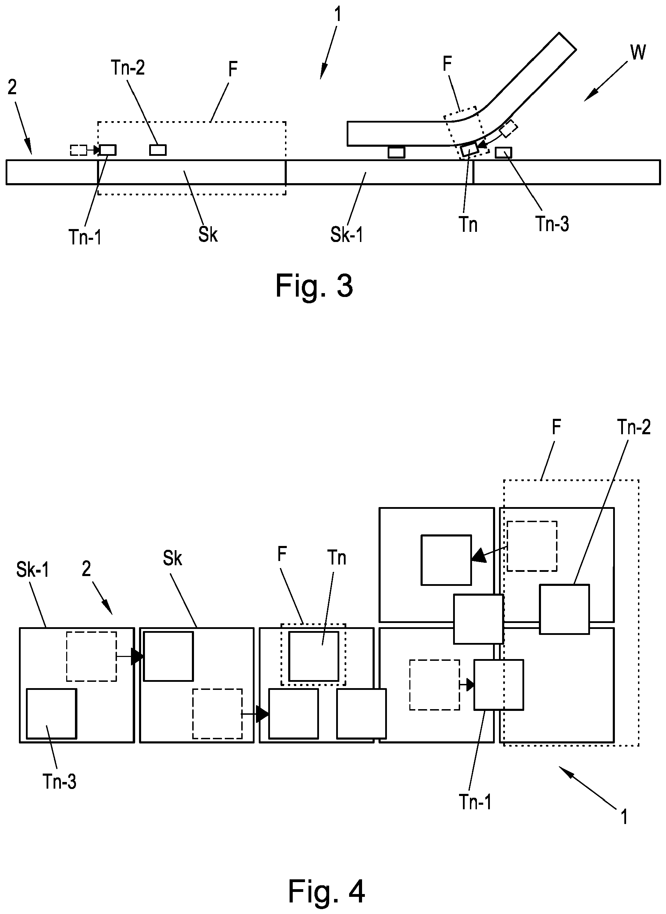

Der Fehlerumfang F kann vom Anlagenfehler abhängig sein, wie anhand der Fig.3 und 4 erläutert wird. Betrifft der Anlagenfehler einen Fehler an der Transporteinheit Tn, so kann der Fehlerumfang F um die Transporteinheit Tn gelegt werden. Der Fehlerumfang F umfasst dabei beispielsweise zumindest den Bereich der Antriebsspulen Am, die zum Zeitpunkt des Auftretens des Anlagenfehlers mit der Transporteinheit Tn zusammenwirken, eventuell zusätzlich auch noch eine Anzahl von Antriebsspulen Am vor und nach der Transporteinheit Tn. In Fig.3 ist strichliert die Transporteinheit Tn vor dem Auftreten des Anlagenfehlers dargestellt mit einem Bewegungspfeil, um die Bewegung der Transporteinheit Tn und des Fehlerumfangs F anzudeuten. In Fig.3 ist noch ein weiterer Anlagenfehler dargestellt, der einen Teil des Stators 2 betrifft, beispielsweise ein ganzes Statorsegment S. In diesem Fall wird der Fehlerumfang F um diesen fehlerhaften Anlagenteil gelegt. Ein solcher Fehlerumfang F über einen Teil des Stators 2 kann auch festgelegt werden, wenn die Istposition einer Transporteinheit Tn nicht mehr oder nicht mehr genau erfasst werden kann. Eine Transporteinheit Tn-1, die sich in diesen Fehlerumfang F hineinbewegt, kann in einen Fehlerzustand überführt werden (in Fig.1 ist strichliert die Transporteinheit Tn-1 mit Bewegungspfeil vor dem Eintreten in den Fehlerumfang F dargestellt). Eine Transporteinheit Tn-2, die sich beim Auftreten des Anlagenfehlers bereits im Fehlerumfang befindet, kann ebenso in einen Fehlerzustand überführt werden. Andere Transporteinheiten Tn-3, die sich außerhalb eines Fehlerumfangs F befinden, sind vom Anlagenfehler nicht betroffen und können normal weiterbewegt werden. Damit ist vom Anlagenfehler nur der Teil der Transportanlage 1 betroffen, an dem der Anlagenfehler auftritt. Die restliche Transportanlage 1 kann normal weiterbetrieben werden. Die Fig.4 zeigt das am Beispiel eines planaren Langstatorlinearmotors.

Es ist natürlich möglich, dass an einer Transportanlage 1 gleichzeitig mehrere Anlagenfehler auftreten können und damit auch mehrere und verschiedene Fehlerumfänge F vorhanden sind. Am grundsätzlichen erfindungsgemäßen Vorgehen ändert das aber nichts.

Die Fehlerreaktionsbewegung kann ebenso vom Anlagenfehler abhängig sein. Es ist aber vorgesehen, dass für jeden möglichen Anlagenfehler eine bestimmte Fehlerreaktionsbewegung festgelegt ist, die dann von der Transportsteuereinheit 10 umgesetzt wird. Als Fehlerreaktionsbewegung muss aber nicht zwingend eine Bewegung zum Stillstand einer Transporteinheit Tn ausgeführt werden.

Betrifft der Anlagenfehler beispielsweise einen Teil des Stators 2, können alle Antriebsspulen Am im Fehlerumfang F stromlos geschaltet werden. Es wäre auch möglich, zumindest eine der betroffenen Antriebsspulen Am im Fehlerumfang F kurzzuschließen, um für eine Transporteinheit Tn einen Induktionshalt (Kurzschluss), wie beispielsweise in EP 3 581 428 A1 beschrieben, zu realisieren, womit die Transporteinheit Tn schneller gestoppt werden kann. Einer Transporteinheit Tn, die sich dabei im Fehlerumfang F befindet, würde damit eine Fehlerreaktionsbewegung aufgezwungen werden. Beim stromlos Schalten der Antriebsspulen Am würde die Transporteinheit Tn antriebskraftlos ausrollen. Im Falle eines Kurzschlusses könnte ein kürzerer Stillstandsweg der Transporteinheit Tn erreicht werden. Die Antriebsspulen Am im Fehlerumfang F können aber auch anders bestromt werden, um im allfälligen Zusammenwirken mit einer Transporteinheit Tn im Fehlerumfang F eine Fehlerreaktionsbewegung der Transporteinheit Tn hervorzurufen. Im Falle von bewegten Permanentmagneten als Magnetfelderzeugungseinheiten könnte vorgesehen sein, die Bewegung der Permanentmagnete im Fehlerumfang F einzustellen. Auch das würde ein kraftloses Ausrollen einer Transporteinheit Tn bewirken.

Im Falle eines Anlagenfehlers, kann auch unterschieden werden, ob aufgrund des Anlagenfehlers eine normale Bewegung der betroffenen Transporteinheit Tn möglich ist oder nicht. Tritt beispielsweise eine Übertemperatur am Stator 2 auf, so kann die Transporteinheit Tn beispielsweise sollwertgeführt, aber mit niedrigerer Geschwindigkeit als im Normalbetrieb weiterbewegt werden. Die Fehlerreaktionsbewegung wäre damit durch die Reduktion der Geschwindigkeit realisiert. Tritt ein Spannungsausfall an einem Bereich des Stators 2 auf, kann als Fehlerreaktionsbewegung einfach ein antriebskraftloses Ausrollen der Transporteinheit Tn (Leerlauf) vorgesehen sein. In diesem Fall kann auch ein Induktionshalt (Kurzschluss), wie beispielsweise in EP 3 581 428 A1 beschrieben, realisiert sein, womit die Transporteinheit Tn schneller gestoppt werden kann. Kann aufgrund des Anlagenfehlers dem Sollwert (z.B. eine Sollposition) der Bewegung der Transporteinheit Tn nicht mehr, oder nur mehr unzureichend bzw. ungenau, gefolgt werden, kann als Fehlerreaktionsbewegung beispielsweise eine andere istwertgeführte Bewegung als der oben erwähnte Kurzschlussfall oder das Stromlosschalten oder das Einstellen der Bewegung der Permanentmagnete, insbesondere eine Bewegung bis zum Stillstand der Transporteinheit Tn, umgesetzt werden. Damit werden auftretende Schleppfehler ignoriert, aber die Transporteinheit Tn kann gesichert in einen gewünschten Zustand überführt werden. Es sind aber natürlich auch andere oder auch weitere implementierte Fehlerreaktionsbewegungen in Abhängigkeit eines Anlagenfehlers möglich.

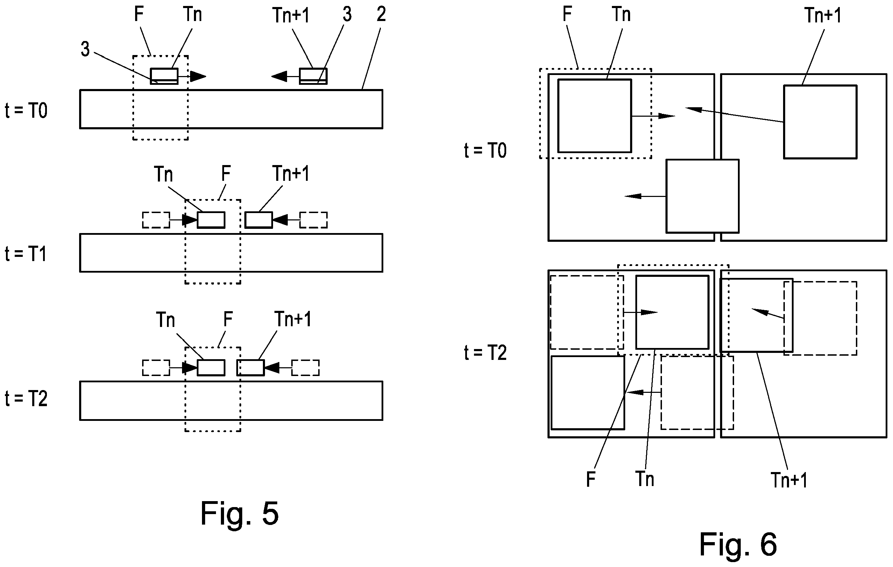

Aufgrund der Bewegungen der Transporteinheiten Tn am Stator 2 können Situationen auftreten, bei der eine weitere Transporteinheit Tn+1 nach dem Auftreten eines Anlagenfehlers in einen Fehlerumfang F hineinbewegt wird oder bei der eine Transporteinheit Tn aus einem Fehlerumfang F hinausbewegt wird. Das wird in den Fig.5 bis 8 anhand von beispielhaften Bewegungssequenzen von Transporteinheit Tn, Tn+1 beschrieben.

In Fig.5 ist eine Bewegungssequenz von zwei Transporteinheiten Tn, Tn+1 dargestellt. Zum Zeitpunkt t=TO wird ein Anlagenfehler erkannt und um die erste Transporteinheit Tn ein Fehlerumfang F gelegt. Der Fehlerumfang F umfasst die Antriebsspulen Am, die mit der Transporteinheit Tn zur Bewegung zusammenwirken. Da es sich um einen Fehler an der ersten Transporteinheit Tn handelt, wird der Fehlerumfang F in diesem Fall mit der fehlerhaften Transporteinheit Tn mitbewegt (Bewegung durch Bewegungspfeil angedeutet). Gleichzeitig wird auch die zweite Transporteinheit Tn+1 weiterbewegt (Fig.5 Mitte zum Zeitpunkt t=T1). Zum Zeitpunkt t=T2 (Fig.5 unten) tritt die zweite Transporteinheit Tn+1 in den Fehlerumfang F ein. Damit wird die zweite Transporteinheit Tn+1 ebenfalls in einen Fehlerzustand überführt und führt eine zweite festgelegte Fehlerreaktionsbewegung aus. Die zweite Fehlerreaktionsbewegung kann beispielsweise ein Notstopp der zweiten Transporteinheit Tn+1 sein, um eine Kollision zu vermeiden. Die Fehlerreaktionsbewegung kann sich aber auch anhand des Zustands der Antriebsspulen Am im Fehlerumfang F ergeben, der sich aufgrund der Fehlerreaktionsbewegung der Transporteinheit Tn ergeben kann. Die Fig.6 zeigt eine solche Situation am Beispiel eines planaren Langstatorlinearmotors zu den beiden Zeitpunkten TO und T2.

Es sei angemerkt, dass als zweite Fehlerreaktionsbewegung möglicherweise keine sollwertgeführte oder istwertgeführte Bewegung der zweiten Transporteinheit Tn+1 umgesetzt werden kann, weil die Antriebsspulen Am im Bereich des Fehlerumfangs F möglicherweise nicht für die Bewegung der zweiten Transporteinheit Tn+1 zur Verfügung stehen oder nicht angesteuert werden können. In diesem Fall könnte aber zumindest ein Ausrollen oder ein Induktionshalt der zweiten Transporteinheit Tn+1 möglich sein.

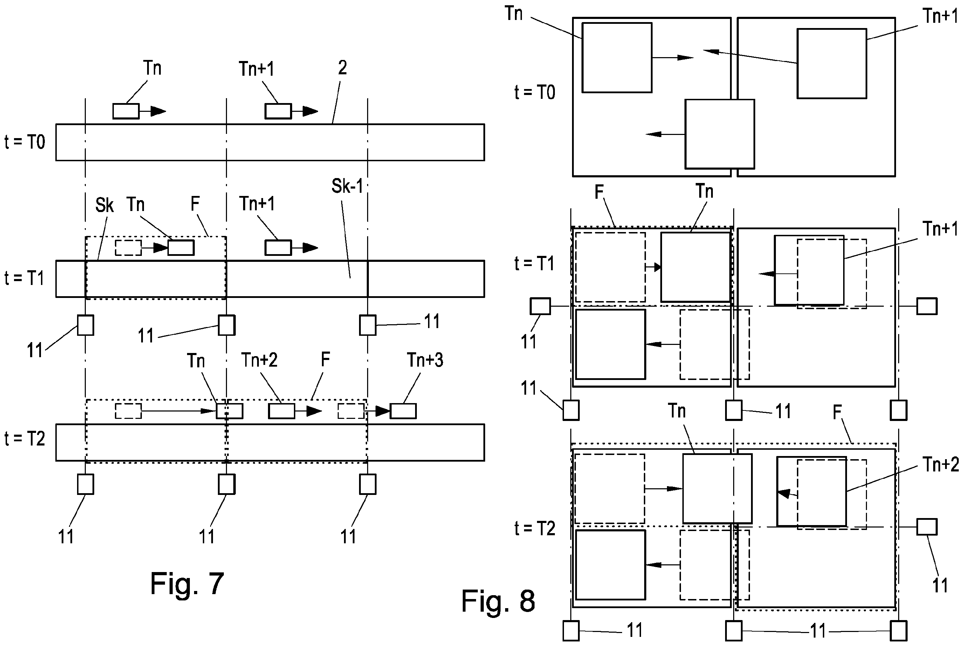

Im Beispiel nach Fig.7 tritt zum Zeitpunkt t=TO ein Anlagenfehler auf, der in diesem Fall einen Teil des Stators 2 betrifft. Es wird damit ein Fehlerumfang F um diesen fehlerhaften Teil gelegt (Fig.7 Mitte zum Zeitpunkt t=T1), beispielsweise um ein ganzes Statorsegment S oder um einen Abschnitt am Stator 2. Es können am Stator 2 aber auch Bereichssensoren 11, beispielsweise Lichtschranken, mechanische oder magnetische Schalter, mechanische oder magnetische Sensoren, induktive Sensoren, Kameras usw., vorgesehen sein. In diesem Fall kann der Fehlerumfang F den Stator 2 zwischen zwei benachbarten Bereichssensoren 11 umfassen (wie im Ausführungsbeispiel nach Fig.7). Befindet sich eine erste Transporteinheit Tn innerhalb des Fehlerumfangs F wird diese in einen Fehlerzustand überführt und führt die vorgesehene Fehlerreaktionsbewegung aus (Fig.7 Mitte zum Zeitpunkt t=T1).

Die Verwendung von Bereichssensoren 11 kann insbesondere bei Anlagenfehlern nützlich sein, welche ein System zur Positionserfassung der Transporteinheit Tn betreffen (z.B. Encoder-Fehler), da die Position der Transporteinheit Tn nicht mehr oder nur mehr unzureichend genau bestimmt werden kann. Die Bereichssensoren 11 können verwendet werden, um den Fehlerumfang F lokal zu beschränken, weil das Verlassen oder Eintreten einer Transporteinheit Tn in den Fehlerumfang über Bereichssensoren 11 unabhängig vom Positionserfassungssystem erfasst werden kann.

Erreicht die erste Transporteinheit Tn zum Zeitpunkt t=T2 die Grenze des festgelegten Fehlerumfangs F (Fig.7 unten), kann der Fehlerumfang F in Abhängigkeit des Anlagenfehlers erweitert werden, beispielsweise um einen weiteren Teil des Stators 2, wie z.B. das in Bewegungsrichtung nachfolgende Statorsegment oder der folgende Bereich bis zum nächsten Bereichssensor 11 (wie in Fig.7). Wenn es der Anlagenfehler gestattet, beispielsweise wenn nur ein Teil des Stators 2 defekt ist aber nicht die erste Transporteinheit Tn, dann kann beim Austreten der ersten Transporteinheit Tn aus dem Fehlerumfang F, der Fehlerzustand der ersten Transporteinheit Tn auch wieder aufgehoben werden. Der Fehlerumfang F müsste damit nicht erweitert werden. Danach könnte die erste Transporteinheit Tn mit normaler Bewegung weiterbewegt werden. Im Falle des Austretens der ersten Transporteinheit Tn, oder einer weiteren, sich im Fehlerumfang F befindlichen Transporteinheit Tn+3 (wie in Fig.7 unten angedeutet) aus dem Fehlerumfang F könnte auch vorgesehen sein, einen weiteren Fehlerumfang F um die austretende Transporteinheit Tn zu legen (wie anhand von Fig.5 und 6 beschrieben).

Würde die zweite Transporteinheit Tn+1 aufgrund deren Bewegung in der Fehlerumfang F gelangen, würde diese in den Fehlerzustand übergeführt und würde die festgelegte zweite Fehlerreaktionsbewegung ausführen (beispielsweise wie oben beschrieben).

Wird aufgrund des Anlagenfehlers der Fehlerumfang F erweitert (wie in Fig.7 unten), kann es passieren, dass sich nach der Erweiterung eine dritte Transporteinheit Tn+2 im erweiterten Fehlerumfang F befindet. In diesem Fall würde die dritte Transporteinheit Tn+2 in einen Fehlerzustand überführt und würde eine dritte festgelegte Fehlerreaktionsbewegung ausführen. Bewegt sich die dritte Transporteinheit Tn+2 aus den Fehlerumfang F heraus, würde, wie oben zur ersten Transporteinheit Tn beschrieben, entweder der Fehlerumfang F nochmals erweitert werden, der Fehlerzustand der dritten Transporteinheit Tn+2 aufgehoben werden, oder ein Fehlerumfang F um die dritte Transporteinheit Tn+2 gelegt.

Die Fig.8 zeigt die Erweiterung des Fehlerumfangs F wieder am Beispiel eines planaren Langstatorlinearmotors.

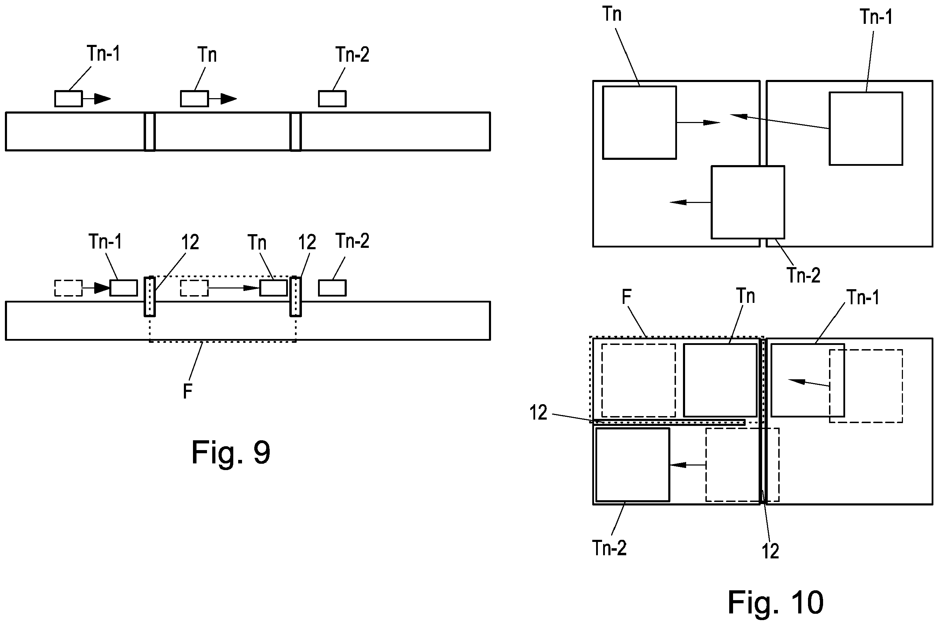

Anstelle einer Erweiterung des Fehlerumfangs F könnte auch vorgesehen sein, dass der Bereich des Fehlerumfangs vom restlichen Bewegungsumfangs des Stators 2 getrennt wird, wie beispielsweise in Fig.9 und 10 dargestellt. Diese Trennung kann physisch mit Bereichsbarrieren 12 erfolgen, oder auch logisch, beispielsweise in der Transportsteuerung 10. Im Falle eines Anlagenfehlers wird der Fehlerumfang F zwischen zwei vorgesehenen Bereichsbarrieren 12, beispielsweise Schranken, Wände, Sperren usw., festgelegt. Der Fehlerumfang F wird durch die Bereichsbarrieren 12 nach außen (zum restlichen Stator 2) abgeschlossen. Eine Transporteinheit Tn im Fehlerumfang F geht wie beschrieben in den Fehlerzustand über und führt die vorgesehene Fehlerreaktionsbewegung aus. Gleichzeitig werden die Bereichsbarrieren 12 aktiviert, die den Fehlerumfang F physisch vom restlichen Bewegungsumfangs des Stators 2 trennen. Damit kann die im Fehlerzustand befindliche Transporteinheit Tn den Fehlerumfang F nicht verlassen. Ebenso kann keine andere Transporteinheit Tn-1, Tn-2 in den Fehlerumfang eintreten. Eine implementierte Kollisionsvermeidung kann dafür sorgen, dass die anderen Transporteinheiten Tn-1, Tn-2 nicht mit einer Bereichsbarriere kollidiert.

Der erfindungsgemäße Ansatz, den Fehlerumfang F lokal einzuschränken, lässt auch folgendes Verfahren zum Betreiben einer Transportanlage 1 zu. Die Transportanlage 1 ist in Form eines Langstatorlinearmotors ausgeführt, mit einem Stator 2 an dem eine Vielzahl von Magnetfelderzeugungseinheiten (Antriebsspulen Am, bewegte Permanentmagnete usw.) angeordnet sind und mit einer Vielzahl von Transporteinheiten Tn, die gleichzeitig entlang des Stators 2 bewegt werden. Im Falle eines Anlagenfehlers an einem Teil der Transportanlage 1 wird ein Fehlerumfang F am Stator 2 festgelegt, wobei der Fehlerumfang F nur einen Teil des Stators 2 mit dem fehlerhaften Teil der Transportanlage 1 umfasst, und es wird eine erste Transporteinheit Tn, die sich in diesem Fehlerumfang F befindet, in einen Fehlerzustand überführt. Dabei wird eine erste festgelegte Fehlerreaktionsbewegung ausführt. Im Falle des Eintretens einer zweiten, am Stator 2 bewegten Transporteinheit Tn+1 in den festgelegten Fehlerumfang F, wird diese zweite Transporteinheit Tn+1 ebenfalls in einen Fehlerzustand überführt und dabei eine zweite festgelegte Fehlerreaktionsbewegung ausführt. Im Falle des Austretens der ersten Transporteinheit Tn oder einer weiteren Transporteinheit Tn+3 aus dem festgelegten Fehlerumfang F, wird der Fehlerumfang F in Abhängigkeit des Anlagenfehlers entweder erweitert, sodass sich die erste Transporteinheit Tn oder die weitere Transporteinheit Tn+3 im erweiterten Fehlerumfang F befindet oder der Fehlerzustand der ersten Transporteinheit Tn oder der weiteren Transporteinheit Tn+3 wird aufgehoben oder es wird um die austretende Transporteinheit Tn, Tn+3 ein weiterer Fehlerumfang F festgelegt. Dieser weitere Fehlerumfang F muss von seiner Ausdehnung nicht dem anderen Fehlerumfang entsprechen, jedenfalls befindet sich dieser weitere Fehlerumfang F an einer anderen Stelle des Stators 2.

Hierbei ist es vorteilhaft, wenn der Fehlerumfang F mit der Bewegung der in den Fehlerzustand überführten ersten Transporteinheit Tn mitbewegt wird, wenn als Anlagenfehler ein Fehler der ersten Transporteinheit Tn festgestellt wird.

Ebenso ist es vorteilhaft, wenn im Falle des Erweiterns des Fehlerumfangs F geprüft wird, ob sich nach der Erweiterung eine dritte Transporteinheit Tn+2 im erweiterten Fehlerumfang F befindet und die durch die Erweiterung in den Fehlerumfang F gelangte dritte Transporteinheit Tn+2 in einen Fehlerzustand überführt wird und dabei eine dritte festgelegte Fehlerreaktionsbewegung ausführt. Dabei kann im Falle des Austretens der dritten Transporteinheit Tn+2 aus dem festgelegten Fehlerumfang, der Fehlerumfang F in Abhängigkeit des Anlagenfehlers entweder erweitert werden, sodass sich die dritte Transporteinheit Tn+2 im erweiterten Fehlerumfang F befindet oder der Fehlerzustand der dritten Transporteinheit Tn+2 aufgehoben werden oder um die dritte Transporteinheit Tn+2 ein weiterer Fehlerumfang F festgelegt werden. Dieser weitere Fehlerumfang F muss von seiner Ausdehnung nicht dem anderen Fehlerumfang entsprechen, jedenfalls befindet sich dieser weitere Fehlerumfang F an einer anderen Stelle des Stators 2.

Auch in dieser Ausführung können Bereichssensoren 11 und/oder Bereichsbarrieren 12 wie beschrieben eingesetzt werden.

## Patentansprüche

1. Verfahren zum Betreiben einer Transportanlage (1) in Form eines Langstatorlinearmotors mit einem Stator (2) an dem eine Mehrzahl von Magnetfelderzeugungseinheiten angeordnet sind und mit einer Mehrzahl von Transporteinheiten (Tn), die gleichzeitig entlang des Stators (2) bewegt werden, wobei im Falle eines Anlagenfehlers an einem Teil der Transportanlage (1), ein Fehlerumfang (F) am Stator (2) festgelegt wird, wobei der Fehlerumfang (F) nur einen Teil des Stators (2) mit dem fehlerhaften Teil der Transportanlage (1) umfasst, und die Magnetfelderzeugungseinheiten im Fehlerumfang (F) in einen vorgegebenen Fehlerzustand übergeführt werden, **dadurch gekennzeichnet, dass** im Falle des Austretens einer Transporteinheit (Tn) aus dem festgelegten Fehlerumfang (F), der Fehlerumfang (F) in Abhängigkeit des Anlagenfehlers erweitert wird, sodass sich die ausgetretene Transporteinheit (Tn) im erweiterten Fehlerumfang (F) befindet **oder dass** im Falle des Austretens einer Transporteinheit (Tn, Tn+3) aus dem festgelegten Fehlerumfang (F), ein weiterer Fehlerumfang (F) um die ausgetretene Transporteinheit (Tn, Tn+3) gelegt wird.

2. Verfahren nach Anspruch 1, **dadurch gekennzeichnet, dass** eine erste Transporteinheit (Tn), die sich in diesem Fehlerumfang (F) befindet oder aufgrund deren Bewegung in den Fehlerumfang (F) eintritt in einen Fehlerzustand übergeführt wird und dabei eine erste festgelegte Fehlerreaktionsbewegung ausführt.

3. Verfahren nach Anspruch 1 oder 2, **dadurch gekennzeichnet, dass** zumindest eine Antriebsspule (Am) als Magnetfelderzeugungseinheit im festgelegten Fehlerumfang (F) stromlos geschaltet wird oder zumindest eine Antriebsspule (Am) als Magnetfelderzeugungseinheit im festgelegten Fehlerumfang (F) kurzgeschlossen wird oder eine Bewegung zumindest eines bewegten Permanentmagnets als Magnetfelderzeugungseinheiten im festgelegten Fehlerumfang (F) gestoppt wird.

4. Verfahren nach einem der Ansprüche 1 bis 3, **dadurch gekennzeichnet, dass** im Fall des Eintretens einer zweiten, am Stator (2) bewegten Transporteinheit (Tn+1) in den festgelegten Fehlerumfang (F), diese zweite Transporteinheit (Tn+1) ebenfalls in einen Fehlerzustand übergeführt wird und dabei eine zweite festgelegte Fehlerreaktionsbewegung ausführt.

5. Verfahren nach Anspruch 1, **dadurch gekennzeichnet, dass** beim Erweitern des Fehlerumfangs (F) geprüft wird, ob sich nach der Erweiterung eine weitere Transporteinheit (Tn+1) im erweiterten Fehlerumfang (F) befindet und die durch die Erweiterung in den Fehlerumfang (F) gelangte weitere Transporteinheit (Tn+1) in einen Fehlerzustand überführt wird und dabei eine weitere festgelegte Fehlerreaktionsbewegung ausführt.

6. Verfahren nach einem der Ansprüche 1 bis 3, **dadurch gekennzeichnet, dass** im Falle des Austretens einer Transporteinheit (Tn+3) aus dem festgelegten Fehlerumfang (F) der Fehlerzustand der ausgetretenen Transporteinheit (Tn+3) aufgehoben wird.

7. Verfahren nach Anspruch 1, **dadurch gekennzeichnet, dass** der Fehlerumfang (F) mit der Bewegung der Transporteinheit (Tn) mitbewegt wird.

8. Verfahren nach einem der Ansprüche 1 bis 3, **dadurch gekennzeichnet, dass** der Fehlerumfang (F) durch Bereichsbarrieren (12) vom restlichen Bewegungsumfang des Stators (2) abgesperrt wird, sodass keine Transporteinheit (Tn) den Fehlerumfang (F) betreten oder aus diesem austreten kann.

9. Verfahren nach einem der Ansprüche 1 bis 7, **dadurch gekennzeichnet, dass** der Fehlerumfang (F) zwischen zwei Bereichssensoren (11) festgelegt wird und ein Eintreten einer Transporteinheit (Tn) in den Fehlerumfang (F) oder Austreten einer Transporteinheit (Tn) aus dem Fehlerumfang (F) mit einem Bereichssensor (11) erfasst wird.

10. Transportanlage in Form eines Langstatorlinearmotors mit einem Stator (2) an dem eine Mehrzahl von Magnetfelderzeugungseinheiten angeordnet sind und mit einer Mehrzahl von Transporteinheiten (Tn), die gleichzeitig entlang des Stators (2) bewegbar sind, wobei Transportsteuerung (10) vorgesehen ist, die im Falle eines Anlagenfehlers an einem Teil der Transportanlage (1), einen Fehlerumfang (F) am Stator (2) festlegt, wobei der Fehlerumfang (F) nur einen Teil des Stators (2) mit dem fehlerhaften Teil der Transportanlage (1) umfasst, und die Transportsteuerung (10), die Magnetfelderzeugungseinheiten im Fehlerumfang (F) in einen vorgegebenen Fehlerzustand überführt, **dadurch gekennzeichnet, dass** die Transportsteuerung (10) im Falle des Austretens einer Transporteinheit (Tn) aus dem festgelegten Fehlerumfang (F) den Fehlerumfang (F) in Abhängigkeit des Anlagenfehlers erweitert, sodass sich die ausgetretene Transporteinheit (Tn) im erweiterten Fehlerumfang (F) befindet **oder dass** die Transportsteuerung (10) im Falle des Austretens einer Transporteinheit (Tn, Tn+3) aus dem festgelegten Fehlerumfang (F) einen weiteren Fehlerumfang (F) um die ausgetretene Transporteinheit (Tn, Tn+3) legt.

11. Transportanlage nach Anspruch 10, **dadurch gekennzeichnet, dass** der Stator (2) mehrere Statorsegmente (Sk) umfasst, wobei an jedem Statorsegment (Sk) zumindest eine Magnetfelderzeugungseinheit vorgesehen ist und der Fehlerumfang (F) zumindest ein Statorsegment (Sk) umfasst.

12. Transportanlage nach Anspruch 10, **dadurch gekennzeichnet, dass** der Stator (2) mehrere Statorabschnitte (SAj) umfasst, wobei an jedem Statorabschnitt (SAj) mehrere Magnetfelderzeugungseinheiten vorgesehen sind und der Fehlerumfang (F) zumindest einen Statorabschnitt (SAj) umfasst.

13. Transportanlage nach einem der Ansprüche 10 bis 12 , **dadurch gekennzeichnet, dass** am Stator (2) Bereichssensoren (11) vorgesehen sind und der Fehlerumfang (F) zwischen zwei Bereichssensoren (11) festgelegt ist, wobei mit den den Fehlerumfang (F) begrenzenden Bereichssensoren (11) ein Eintreten einer Transporteinheit (Tn) in den Fehlerumfang (F) oder ein Austreten einer Transporteinheit (Tn) aus dem Fehlerumfang (F) erfassbar ist.

14. Transportanlage nach einem der Ansprüche 10 bis 12 , **dadurch gekennzeichnet, dass** am Stator (2) Bereichsbarrieren (12) vorgesehen sind und der Fehlerumfang (F) zwischen zwei Bereichsbarrieren (12) festgelegt ist, wobei die den Fehlerumfang (F) begrenzenden Bereichsbarrieren (12) ein Eintreten einer Transporteinheit (Tn) in den Fehlerumfang (F) oder ein Austreten einer Transporteinheit (Tn) aus dem Fehlerumfang (F) verhindern.

## Claims

1. Method for operating a transport system (1) in the form of a long-stator linear motor comprising a stator (2) on which a plurality of magnetic-field-generating units is arranged and comprising a plurality of transport units (Tn) which are moved along the stator (2) simultaneously, wherein in the event of a system error in a part of the transport system (1), an error area (F) is defined on the stator (2), whereas the error area (F) includes only a part of the stator (2) having the defective part of the transport system (1), and the magnetic-field-generating units within the error area (F) are transferred to a specified error state, **characterized in that** if a transport unit (Tn) leaves the defined error area (F), the error area (F) is expanded depending on the system error, so that the transport unit (Tn) that has left is within the expanded error area (F) **or in that** if a transport unit (Tn, Tn+3) leaves the defined error area (F), a further error area (F) is placed around the transport unit (Tn, Tn+3) that has left.

2. Method according to claim 1, **characterized in that** a first transport unit (Tn) which is within this error area (F), or due to its movement enters the error area (F), is transferred to an error state and in the process executes a first defined error response movement.

3. Method according to either claim 1 or 2, **characterized in that** at least one drive coil (Am) as the magnetic-field-generating unit within the defined error area (F) is de-energized or at least one drive coil (Am) as the magnetic-field-generating unit within the defined error area (F) is short-circuited or a movement of at least one moving permanent magnet as the magnetic-field-generating units within the defined error area (F) is stopped.

4. Method according to any of claims 1 to 3, **characterized in that** if a second transport unit (Tn+1) moving on the stator (2) enters the defined error area (F), this second transport unit (Tn+1) is also transferred to an error state and in the process executes a second defined error response movement.

5. Method according to claim 1, **characterized in that** when expanding the error area (F), it is checked whether, after the expansion, there is a further transport unit (Tn+1) within the expanded error area (F), and the further transport unit (Tn+1) that has entered the error area (F) as a result of the expansion is transferred to an error state and in the process executes a further defined error response movement.

6. Method according to any of claims 1 to 3, **characterized in that** if a transport unit (Tn+3) leaves the defined error area (F), the error state of the transport unit (Tn+3) that has left is canceled.

7. Method according to claim **Fehler! Verweisquelle konnte nicht gefunden werden., characterized in that** the further error area (F) is moved along with the movement of the transport unit (Tn).

8. Method according to any of claims 1 to 3, **characterized in that** the error area (F) is isolated from the rest of the area of movement of the stator (2) by area barriers (12), so that no transport unit (Tn) can enter or leave the error area (F).

9. Method according to any of claims 1 to 7, **characterized in that** the error area (F) is defined between two area sensors (11), and a transport unit (Tn) entering the error area (F) or a transport unit (Tn) leaving the error area (F) is detected by means of an area sensor (11).

10. Transport system in the form of a long-stator linear motor comprising a stator (2) on which a plurality of magnetic-field-generating units is arranged and comprising a plurality of transport units (Tn) which can be moved along the stator (2) simultaneously, wherein a transport controller (10) is provided which, in the event of a system error in a part of the transport system (1), defines an error area (F) on the stator (2), whereas the error area (F) only includes a part of the stator (2) having the defective part of the transport system (1), and the transport controller (10) transfers the magnetic-field-generating units within the error area (F) to a specified error state, **characterized in that,** if a transport unit (Tn) leaves the defined error area (F), the transport controller (10) expands the error area (F) depending on the system error, so that the transport unit (Tn) that has left is within the expanded error area (F) **or in that,** if a transport unit (Tn, Tn+3) leaves the defined error area (F), the transport controller (10) places a further error area (F) around the transport unit (Tn, Tn+3) that has left.

11. Transport system according to claim 10, **characterized in that** the stator (2) comprises a plurality of stator segments (Sk), at least one magnetic-field-generating unit being provided on each stator segment (Sk) and the error area (F) comprising at least one stator segment (Sk).

12. Transport system according to claim 10, **characterized in that** the stator (2) comprises a plurality of stator sections (SAj), a plurality of magnetic-field-generating units being provided on each stator section (SAj) and the error area (F) comprising at least one stator section (SAj).

13. Transport system according to any of claims 10 to 12, **characterized in that** area sensors (11) are provided on the stator (2) and the error area (F) is defined between two area sensors (11), it being possible to detect, by means of the area sensors (11) that delimit the error area (F), a transport unit (Tn) entering the error area (F) or a transport unit (Tn) leaving the error area (F).

14. Transport system according to any of claims 10 to 12, **characterized in that** area barriers (12) are provided on the stator (2) and the error area (F) is defined between two area barriers (12), the area barriers (12) that delimit the error area (F) preventing a transport unit (Tn) from entering the error area (F) or preventing a transport unit (Tn) from leaving the error area (F).

## Revendications

1. Procédé de fonctionnement d'une installation de transport (1) sous forme d'un moteur linéaire à stator long comprenant un stator (2) sur lequel sont disposées une pluralité d'unités génératrices de champ magnétique et une pluralité d'unités de transport (Tn) qui sont déplacées simultanément le long du stator (2), dans lequel, en cas de défaut de l'installation sur une partie de l'installation de transport (1), un périmètre de défaut (F) est défini sur le stator (2), dans lequel le périmètre de défaut (F) ne comprend qu'une partie du stator (2) avec la partie défectueuse de l'installation de transport (1), et les unités génératrices de champ magnétique sont amenées à passer dans un état de défaut prédéfini dans le périmètre de défaut (F), **caractérisé en ce que**, dans le cas où une unité de transport (Tn) sort du périmètre de défaut (F) défini, le périmètre de défaut (F) est élargi en fonction du défaut de l'installation, de sorte que l'unité de transport (Tn) sortie se trouve dans le périmètre de défaut (F) élargi ou que, dans le cas de la sortie d'une unité de transport (Tn, Tn+3) du périmètre de défaut (F) défini, un autre périmètre de défaut (F) est établi autour de l'unité de transport (Tn, Tn+3) sortie.

2. Procédé selon la revendication 1, **caractérisé en ce qu'**une première unité de transport (Tn) qui se trouve dans ledit périmètre de défaut (F) ou qui pénètre dans le périmètre de défaut (F) en raison de son mouvement est amenée à passer dans un état de défaut et effectue de ce fait un premier mouvement de réaction au défaut défini.

3. Procédé selon la revendication 1 ou 2, **caractérisé en ce qu'**au moins une bobine d'entraînement (Am), en tant qu'unité génératrice de champ magnétique, est mise hors tension dans le périmètre de défaut (F) défini, ou **en ce qu'**au moins une bobine d'entraînement (Am), en tant qu'unité génératrice de champ magnétique, est court-circuitée dans le périmètre de défaut (F) défini, ou **en ce qu'**un mouvement d'au moins un aimant permanent déplacé, en tant qu'unité génératrice de champ magnétique, est interrompu dans le périmètre de défaut (F) défini.

4. Procédé selon l'une des revendications 1 à 3, **caractérisé en ce que**, dans le cas où une seconde unité de transport (Tn+1) déplacée sur le stator (2) pénètre dans le périmètre de défaut (F) défini, ladite seconde unité de transport (Tn+1) est également amenée à passer dans un état de défaut et effectue de ce fait un second mouvement de réaction au défaut défini.

5. Procédé selon la revendication 1, **caractérisé en ce que**, lors de l'élargissement du périmètre de défaut (F), il est vérifié si une autre unité de transport (Tn+1) se trouve, après l'élargissement, dans le périmètre de défaut (F) élargi, et **en ce que** l'autre unité de transport (Tn+1) ayant atteint le périmètre de défaut (F) du fait de l'élargissement est amenée à passer dans un état de défaut et effectue de ce fait un autre mouvement de réaction au défaut défini.

6. Procédé selon l'une des revendications 1 à 3, **caractérisé en ce que**, dans le cas où une unité de transport (Tn+3) sort du périmètre de défaut (F) défini, l'état de défaut de l'unité de transport (Tn+3) sortie est annulé.

7. Procédé selon la revendication 1, **caractérisé en ce que** le périmètre de défaut (F) est déplacé en association avec le mouvement de l'unité de transport (Tn).

8. Procédé selon l'une des revendications 1 à 3, **caractérisé en ce que** le périmètre de défaut (F) est isolé du reste du périmètre de mouvement du stator (2) par des barrières de zone (12), de sorte qu'aucune unité de transport (Tn) ne peut pénétrer dans le périmètre de défaut (F) ou en sortir.

9. Procédé selon l'une des revendications 1 à 7, **caractérisé en ce que** le périmètre de défaut (F) est défini entre deux capteurs de zone (11) et **en ce qu'**une entrée d'une unité de transport (Tn) dans le périmètre de défaut (F) ou une sortie d'une unité de transport (Tn) du périmètre de défaut (F) est détectée par un capteur de zone (11).

10. Installation de transport sous forme d'un moteur linéaire à stator long comprenant un stator (2) sur lequel sont disposées une pluralité d'unités génératrices de champ magnétique et une pluralité d'unités de transport (Tn) qui sont déplaçables simultanément le long du stator (2), dans laquelle il est prévu une unité de commande de transport (10) qui définit un périmètre de défaut (F) sur le stator (2) en cas de défaut de l'installation sur une partie de l'installation de transport (1), dans laquelle le périmètre de défaut (F) ne comprend qu'une partie du stator (2) avec la partie défectueuse de l'installation de transport (1), et l'unité de commande de transport (10) fait passer les unités génératrices de champ magnétique se trouvant dans le périmètre de défaut (F) dans un état de défaut prédéfini, **caractérisée en ce que**, dans le cas où une unité de transport (Tn) sort du périmètre de défaut (F) défini, l'unité de commande de transport (10) élargit le périmètre de défaut (F) en fonction du défaut de l'installation, de sorte que l'unité de transport (Tn) sortie se trouve dans le périmètre de défaut (F) élargi ou que, dans le cas où une unité de transport (Tn, Tn+3) sort du périmètre de défaut (F) défini, l'unité de commande de transport (10) établit un autre périmètre de défaut (F) autour de l'unité de transport (Tn, Tn+3) sortie.

11. Installation de transport selon la revendication 10, **caractérisée en ce que** le stator (2) comprend plusieurs segments de stator (Sk), dans laquelle il est prévu sur chaque segment de stator (Sk) au moins une unité génératrice de champ magnétique et le périmètre de défaut (F) comprend au moins un segment de stator (Sk).

12. Installation de transport selon la revendication 10, **caractérisée en ce que** le stator (2) comprend plusieurs segments de stator (Sk), dans laquelle il est prévu sur chaque segment de stator (Sk) plusieurs unités génératrices de champ magnétique et le périmètre de défaut (F) comprend au moins un segment de stator (Sk).

13. Installation de transport selon l'une des revendications 10 à 12, **caractérisée en ce qu'**il est prévu sur le stator (2) des capteurs de zone (11) et **en ce que** le périmètre de défaut (F) est défini entre deux capteurs de zone (11), dans laquelle les capteurs de zone (11) délimitant le périmètre de défaut (F) permettent de détecter une entrée d'une unité de transport (Tn) dans le périmètre de défaut (F) ou une sortie d'une unité de transport (Tn) du périmètre de défaut (F).

14. Installation de transport selon l'une des revendications 10 à 12, **caractérisée en ce qu'**il est prévu sur le stator (2) des barrières de zone (12) et **en ce que** le périmètre de défaut (F) est défini entre deux barrières de zone (12), dans laquelle les barrières de zone (12) délimitant le périmètre de défaut (F) empêchent une entrée d'une unité de transport (Tn) dans le périmètre de défaut (F) ou une sortie d'une unité de transport (Tn) du périmètre de défaut (F).
